# EUROPEAN PATENT APPLICATION

(11) **EP 2 429 245 A1**
(43) Date of publication of application: **14.03.2012**
(21) Application number: 10788991.7
(22) Date of filing: 28.06.2010
(51) Int. Cl.: H04W 52/12, H04W 52/14, H04W 52/18

(54) **METHOD AND BASE STATION FOR INNER-LOOP POWER CONTROL**

(30) Priority: 29.10.2009 CN 200910207165
(71) Applicant: ZTE Corporation, Shenzhen, Guangdong 518057 (CN)
(72) Inventor: DING, Jiewei, Shenzhen Guangdong 518057 (CN); ZHANG, Yun, Shenzhen Guangdong 518057 (CN); CHEN, Hua, Shenzhen Guangdong 518057 (CN); ZHAI, Yibin, Shenzhen Guangdong 518057 (CN); CHEN, Han, Shenzhen Guangdong 518057 (CN); GENG, Yunliang, Shenzhen Guangdong 518057 (CN)
(74) Representative: Sander Jakobsson, Sofia Ellinor
(86) International application number: PCT/CN2010/074642
(87) International publication number: WO 2010/145595

(57) **Abstract**

The present invention discloses a method and Node B for inner-loop power control. Said method includes: the Node B sets a received total wideband power threshold (RTWP_Th), and periodically measures the current received total wideband power (RTWP) of the cell during the process of the Node B receiving the uplink power of the user equipment (UE). If any UE satisfies the following conditions, the Node B sets the current power control word of the UE as descending power and transmits it to the UE; said conditions include: the current RTWP is larger than the RTWP_Th, and the previous power control word of the UE is ascending power. With the technical scheme provided in the present invention, the uplink power of the UE in the cell can be controlled according to the current RTWP to stabilize the RTWP around the target value of RTWP and ensure the operation stability of the code division multiple access (CDMA) system.

## Description

### Technical Field

The present invention relates to the field of communication technology, and more especially, to a method and Node B for inner-loop power control.

### Background of the Related Art

In code division multiple access (CDMA) wireless communication system, signals from different user equipment (UE) interfere with each other, and so do the signals from adjacent cells. In order to prevent the ascending of the signals from different UE in each cell, method for power control is most important. Take the wideband CDMA (WCDMA) for example, a variety of power control methods are defined in the 3^{rd} generation partnership project (3GPP) protocol. For example, a method for uplink inner-loop power control is defined in the 3GPP specification of TS25.214, that is, the "Technical Specification Group Radio Access Network: Physical layer procedures (FDD)".

In order to keep the uplink received signal to interference radio (SIR) around a given SIR target value (SIRtarget), the uplink inner-loop power control needs to adjust the transmitting power of the UE. The active set cells should estimate the SIR of the uplink Dedicated Physical Channel (DPCH) to acquire the SIRest. Afterwards, each active set cell generate and transmit the transmission power control (TPC) command (TPCcommand) at each slot according to the following rules: if SIRest>SIRtarget, the transmitted TPC is "0", and if SIRest<SIRtarget, the transmitted TPC is "1".

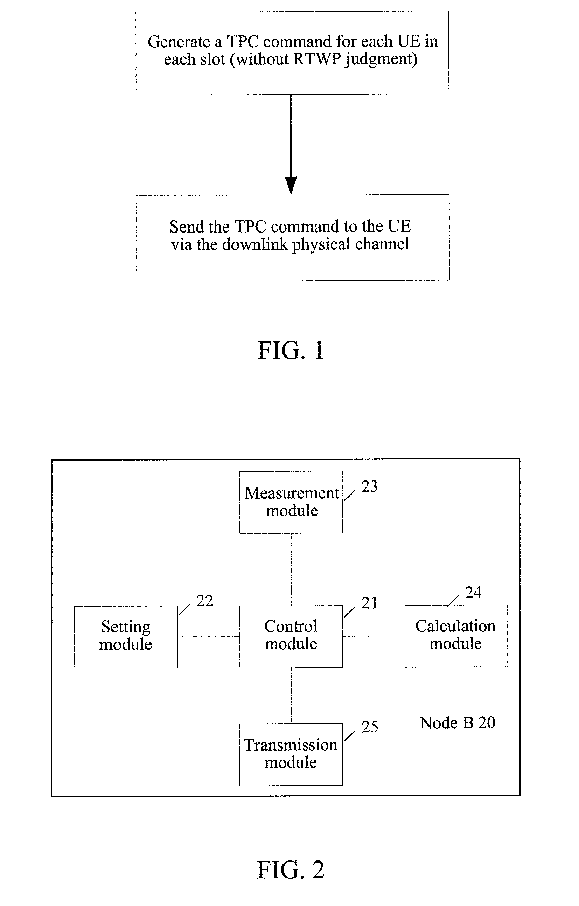

FIG. 1 is a flow of the inner-loop power control in the prior art. As described in the "Background of the related art", the TPCcommand can be acquired by comparing the SIR measurement value with the SIRtarget. After acquiring the TPCcommand, directly transmit the TPCcommand to the UE without judging the received total wideband power (RTWP).

Moreover, according to the 3GPP TS25.433 protocol, the system should set a reference RTWP and a maximum target RTWP of a Node B, respectively denoted as RTWPref and the RTWPtarget. Wherein, the RTWPref is equivalent to the system receiving noise (base noise) when there is no UE. The difference between the RTWP and the RTWPref is also called rise over thermal (ROT), and the result of RTWPtarget-RTWPref is also called ROTtarget. With the ascending of the UE power received by the Node B, so does the RTWP, but for the system stability and avoiding a case that the performance cannot be improved due to the ascending of the UE power, the RTWP can not be ascended too high and it should be controlled around the TRWPtarget or lower than the RTWPtarget. In the prior art, however, the inner-loop power control does not refer to the RTWP state, and the RTWP is indirectly controlled by a high speed uplink packet access (HSUPA) scheduler and a radio network controller (RNC). The disadvantages of this RTWPtarget control are:
(1) Low control speed. Control cannot be done according to the RTWP change in time.
(2) The HSUPA scheduler control is not entirely consistent with the power control, which leads to the power control making the RTWP much larger than the RTWPtarget.

### Summary of the Invention

The technical problem to be solved by the present invention is to provide a Node B and method for inner-loop power control to effectively control the uplink power of the UE in a cell according to the current RTWP, to ensure that the received RTWP is lower than or close to the given RTWPtarget.

In order to solve the abovementioned problem, the present invention provides a method for inner-loop power control, and the method comprises:
the Node B sets a RTWP threshold (RTWP_Th); and periodically measure current RTWP of a cell in a process of the Node B receiving uplink powers of UEs, and for each UE, if the following conditions are satisfied, the Node B sets a current power control word of the UE as descending power and transmits it to the UE:
   (a) Said current RTWP is larger than the RTWP_Th; and (b) a previous power control word of the UE is ascending power.

Said method also comprises: for each UE, the Node B calculates the power control word of the UE, and when either of conditions (a) and (b) or both are not satisfied, said Node B takes the calculated power control word as the current power control word of the UE and transmits it to the UE.

The step of said Node B calculating the power control word of the UE comprises: said Node B calculates the power control word of each UE in each measurement period or calculates the power control word of the corresponding UE when either of the conditions (a) and (b) or both are not satisfied.

The present invention also provides a method for inner-loop power control, and the method comprises:
the Node B sets the RTWP_Th and periodically measures the current RTWP of the cell during the process of the Node B receiving the uplink power of the UE, and for each UE, if the current RTWP is larger than the RTWP_Th, sets the current power control word of the UE as descending power and transmits the current power control word to the UE.

Said method also comprises: if the current RTWP is less than or equal to the RTWP_Th, the Node B calculates the current power control word of each UE in the cell and transmits the calculated current power control word to each UE.

Said method also comprises: said Node B calculates the power control word of each UE in each measurement period or when the current RTWP is less than or equal to the RTWP_Th.

The present invention also provides a Node B for inner-loop power control, and the Node B comprises a measurement module, a setting module, a control module and a transmission module;
said setting module is configured to set a RTWP threshold (RTWP_Th);
said measurement module is configured to: periodically measure current RTWP of a cell in a process of the Node B receiving uplink power of UE;
said control module is configured to: when following conditions are satisified, set a current power control word of the UE as descending power and transmiting the current power control word of the UE to the transmission module:
(a) said current RTWP is larger than the RTWP_Th; and (b) a previous power control word of the UE is ascending power;
said transmission module is configured to: transmit the received current power control word of the UE to the UE.
Said Node B also comprises a calculation module, and said calculation module is configured to: calculate the power control word of each UE and transmiting the calculated power control word to the control module;
said control module is also configured to: when either of conditions (a) and (b) or both are not satisfied, transmiting the current power control word of the UE calculated by the calculation module to the transmission module.

Said calculation module is also configured to: calculate the power control word of each UE in each measurement period or calculating the power control word of the corresponding UE when either of the conditions (a) and (b) or both are not satisfied.

The present invention also provides a Node B for inner-loop power control, and the Node B comprises a measurement module, a setting module, a control module and a transmission module;
said setting module is configured to set a RTWP threshold (RTWP_Th);
said measurement module is configured to: periodically measure current RTWP of a cell in a process of the Node B receiving uplink power of UE;
said control module is configured to: judge whether the current RTWP is larger than the RTWP_Th or not, and if yes, set a current power control word of each UE as descending power and transmit the current power control word of each UE to the transmission module;
said transmission module is configured to: transmit the current power control word of each UE to the corresponding UE.

Said Node B also comprises a calculation module, and said calculation module is configured to: calculate the power control word of each UE and transmit the calculated power control word of each UE to the control module;
said control module is also configured to: when the current RTWP is less than or equal to the RTWP_Th, take the power control word of each UE calculated by the calculation module as the current power control word of each UE.

Said calculation module is also configured to: calculate the power control word of the UE according to a following method: calculating the power control word of each UE in each measurement period or when the current RTWP is less than or equal to the RTWP_Th.

To sum up, the present invention provides a Node B and method for inner-loop power control to effectively control the uplink power of the UE in the cell according to the current RTWP so that the RTWP can stay around the RTWPtarget better and the CDMA system can be ensured to operate more stably.

### Brief Description of Drawings

FIG. 1 is a flow chart of the inner-loop power control in the prior art;
FIG. 2 is a schematic diagram of the structure of the Node B in the present invention;
FIG. 3 is a flow chart of the inner-loop power control in accordance with the first example of the present invention;
FIG. 4 is a flow chart of the inner-loop power control in accordance with the second example of the present invention;
FIG. 5 is a schematic diagram of the power control effect of the first application example of the present invention;
FIG. 6 is a schematic diagram of the power control effect of the second application example of the present invention.

### Preferred Embodiments of the Present Invention

### System examples

### The first example

The present example provides a Node B 20 for inner-loop power control, and as shown in FIG. 2, the Node B 20 comprises a control module 21, a setting module 22, a measurement module 23, a calculation module 24 and a transmission module 25;
the setting module 22 is used to set a received total wideband power threshold (RTWP_Th); RTWP_Th=RTWPtarget+Delta; wherein, -6≤Delta≤6dB.

The measurement module 23 is used to periodically measure the current RTWP of the cell in the process of the Node B receiving the uplink powers of the UEs;
the calculation module 24 is used to calculate the TPCcommand of each UE and transmit the calculated TPCcommand to the control module 21;
the control module 21 is used to set the current TPCcommand of the UE as descending power when all the following conditions are satisfied and transmit the current TPCcommand of the UE to the transmission module 25:
(a) When the current RTWP is larger than the RTWP_Th; (b) the previous TPCcommand of the UE is ascending power;
the control module 21 is also used to transmit the current TPCcommand of the UE calculated by the calculation module 24 to the transmission module 25 when either of the above conditions (a) and (b) or both are not satisfied.

The transmission module is used to transmit the received current TPCcommand of the UE to the UE.

The calculation module 24 might calculate the TPCcommand of each UE in each measurement period or calculate the TPCcommand of the corresponding UE when either of conditions (a) and (b) or both are not satisfied.

### The second example

The present example provides a Node B 20 for inner-loop power control, and as shown in FIG. 2, the Node B 20 comprises a control module 21, a setting module 22, a measurement module 23, a calculation module 24 and a transmission module 25;
the setting module 22 is used to set the RTWP_Th; RTWP_Th=RTWPtarget+Delta; wherein, -6≤Delta≤6dB.

The measurement module 23 is used to periodically measure the current RTWP (RTWPcurrent) of the cell in the process of the Node B receiving the uplink powers of the UEs;
the calculation module 24 is used to calculate the TPCcommand of each UE and transmit the calculated TPCcommand of each UE to the control module 21;
the control module 21 is used to judge whether the RTWPcurrent is larger than the RTWP_Th or not, and if yes, set the current TPCcommand of each UE as descending power; and when the above RTWPcurrent is less than or equal to the RTWP_Th, take the TPCcommand of each UE calculated by the calculation module 24 as the current TPCcommand of each UE;
the control module 21 is also used to transmit the current TPCcommand of each UE to the transmission module 25;
the transmission module 25 is used to transmit the current TPCcommand of each UE to the corresponding UE.

The calculation module 24 might calculate the TPCcommand of each UE in each measurement period or when the current RTWP is less than or equal to the RTWP_Th.

### Method Examples

### the first example

The present example provides a method for inner-loop power control, during the system initialization, the NodeB sets a threshold RTWP_Th=RTWPtarget+Delta. The unit of these values might be dB. Wherein, the RTWPtarget is the parameter configured and sent by the radio network controller to the NodeB. The value of the Delta might be -6∼6dB. The TPCsent can be set as 0 when the first radio link of each UE is established;
the TPCsent indicates the TPCcommand sent to the UE last time, and 0 indicates descending power, 1 indicates ascending power.

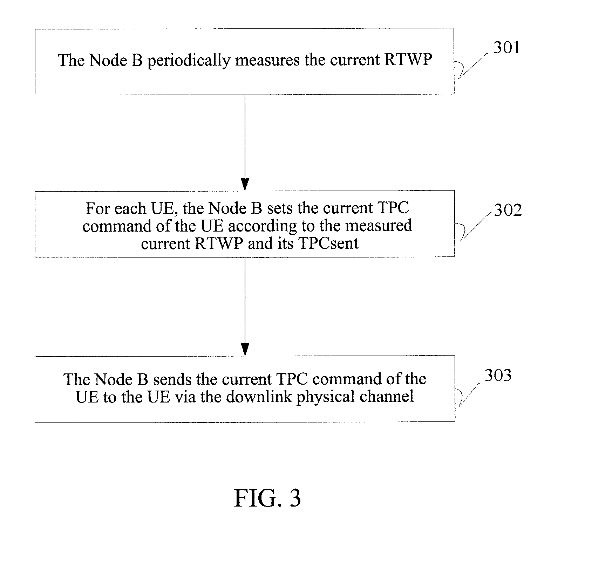

FIG. 3 shows a flow chart of inner-loop power control in the process of the Node B receiving the uplink power of the UE in the present example;
Step 301: the NodeB periodically measures the current RTWP (that is, the RTWPcurrent), and the measurement period can be 1 slot;
the RTWPcurrent indicates the total power of all signals and interference currently received by the cell in the NodeB, and the total power includes the power of all UEs in the local cell, the interference from UEs in other cells to the local cell, as well as other noises.
Step 302: for each UE, the NodeB sets the current TPCcommand of the UE according to the measured RTWPcurrent and the TPCsent; specifically, if the following two conditions are satisfied at the same time, the NodeB sets the current TPCcommand of the UE as 0;
(a) RTWPcurrent is larger than RTWP_Th, (b) TPCsent=1, that is, the previous power control word of the UE is ascending power;
otherwise, if either of the abovementioned two conditions or both are not satisifed, for the uplink power control of each UE, the NodeB calculates the TPCcommand and takes the calculated TPCcommand as the current TPCcommand of the UE; the calculation method is known in the prior art;

NodeB might calculate the TPCcommand of each UE in each measurement period or calculate the TPCcommand of the corresponding UE when either of the abovementioned conditions (a) and (b) or both are not satisfied.

Step 303: Node B transmits the current TPCcommand of the UE to the UE via the downlink physical channel, and records TPCSent=TPCcommand.

The TPCsent can be assigned descending power "0" or ascending power "1" when establishing the radio link set, and the initial value has trivial effects on system performance and can be completely neglected. The inner-loop power control mechanism in the present example can guarantee that the power of all UEs do not continuously ascend or descend when the RTWPcurrent is larger than the RTWP_Th, a mode such as "ascending, descending, ascending, descending......" is used to maintain the power (the TPCcommand for maintaining the power is not defined in the system), thus the system power can be stably kept at or below the RTWPtarget.

### The second example

The present example provides a method for inner-loop power control, during the system initialization, the NodeB sets a threshold RTWP_Th=RTWPtarget+Delta. The unit of these values might be dB. Wherein, the RTWPtarget is the parameter configured and sent by the radio network controller to the NodeB. The value of the Delta might be -6∼6dB.

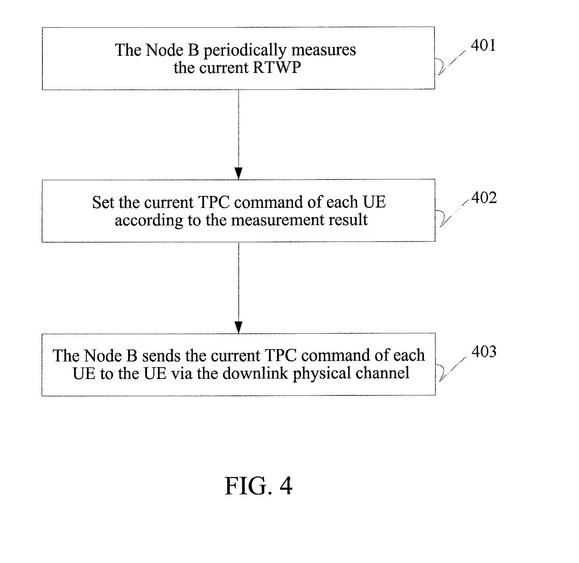

FIG. 4 shows a flow chart of inner-loop power control in the process of the Node B receiving the uplink power of the UE in the present example;

Step 401: the NodeB periodically measures the current RTWP (that is, the RTWPcurrent), and the measurement period can be 1 slot;

Step 402: set the current TPCcommand of each UE according to the measured RTWPcurrent; specifically, if RTWPcurrent is larger than RTWP_Th, set the current TPCcommand of each UE as 0, that is, descend the uplink power of each UE; otherwise:
for the uplink power control of each UE, the NodeB calculates the TPCcommand and takes the calculated TPCcommand as the current TPCcommand of the UE; 0 might denote descending power, and 1 might denote ascending power; the method for calculating the TPCcommand is known in the prior art.

The NodeB might calculate the TPCcommand of each UE in each measurement period or calculate the TPCcommand of the UE when the current RTWP is less than or equal to the RTWP_Th.

Step 403: the NodeB transmits the current TPCcommand of each UE to the UE via the downlink physical channel.

When the UE in the present example performs inner-loop power control, it considers the size of the current RTMP. When the RTWPcurrent is relatively large, the ascending of the power is limited, that is, when ensuring that the RTWP is larger than the RTWP_Th, all UEs descend power, so as to make the power control consistent with the RTWP control, and the RTWP can be controlled in time, so that system power can be stably stayed at or below the RTWPtarget.

The present invention will be described in further detail in combination with the application examples.

Suppose that there are three UEs in the WCDMA system, and their SIRtargets are all 10.5dB, and the ratio of the total power of UE to the DPCCH power of a control channel is 10dB, and the ROTtarget (that is, RTWPtarget-RTWPref) is 6dB. At the beginning, the SIRs of the 3 UEs are respectively 8.71 dB, 9.31dB and 9.87dB, and the ROT right now is exactly 6dB. If according to the existing power control method, continuously ascend the power of these three UEs to reach their own SIRtargets, finally, the ROT is ascended to about 10.11dB, much larger than the ROTtarget, and at this time the system is very unstable.

### The first application example

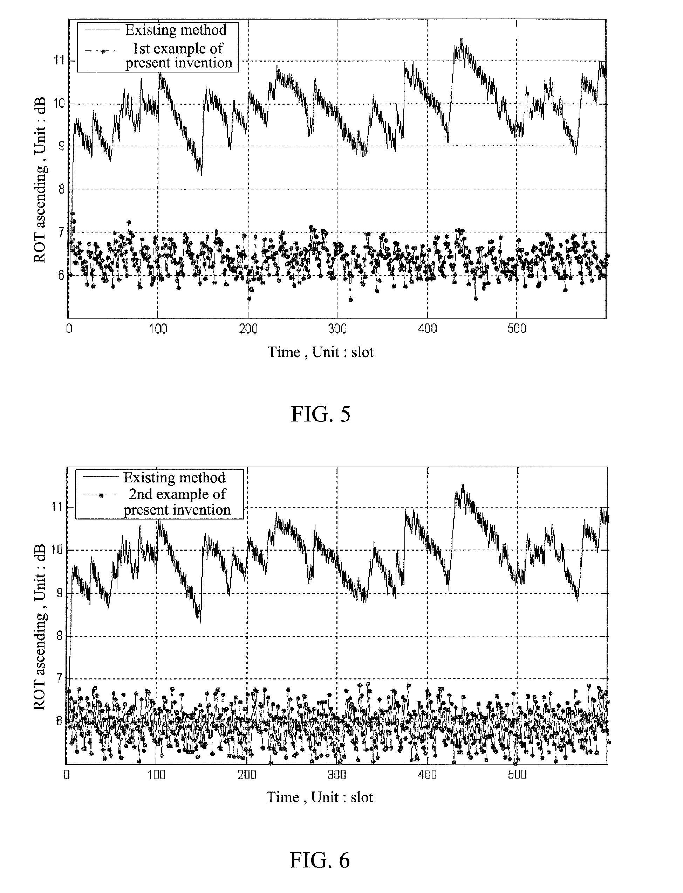

In the abovementioned hypothesis scenario, the solid curve in the upper part of FIG. 5 is the curve of the ROT change in the existing algorithm, and in the initial five slots, the ROT is ascended from 6dB to 9.5dB. The RNC and the HSUPA scheduler cannot control this ascending speed of power in time. Afterwards, the ROT cannot descend to the ROTtarget, and the mean value of the ROT is 10.11dB, and the mean square error is 0.3dB.

In the abovementioned hypothesis scenario, the dash-dotted line in the lower part of FIG. 5 is the curve of the ROT change in the method of the present invention. In this example, it supposes that Delta=0, that is, RTWP_Th=RTWPtarget. As shown in FIG. 5, it is a diagram of the ROT curve in 600 slots, and in these 600 slots, the mean value of the ROT is 6.39dB, and the mean square error is 0.1dB. It can be seen that the RTWP can be relatively stable around the RTWPtarget. If 6.39 still seems too high, set Delta=-0.39, that is, RTWP_Th=RTWPtarget-0.39 dB, thus it can more accurately stay around the RTWPtarget.

According to the above analysis, it can be seen that the method of the present invention has a more accurate mean value and a smaller variance than the existing method, that is, it has better control capability for the RTWPtarget. In the CDMA system, the method of the present invention can be applied to acquire very evident beneficial effects.

### The second application example

In the abovementioned hypothesis scenario, the dash-dotted line in the lower part of FIG. 6 is the curve of the ROT change in the second example of the present invention. In this example, it supposes that Delta=0, that is, RTWP_Th=RTWPtarget. As shown in FIG. 6, it is a diagram of the ROT curve in 600 slots, and in these 600 slots, the mean value of the ROT is 5.94dB, and the mean square error is 0.2dB. It can be seen that the RTWP can better stably stay around the RTWPtarget in the second example of the present invention.

Compared with the first example, the second example is a little simpler, but the variance of the second example is larger than that of the first example and the performance is a little poorer. No matter the first example or the second example, it can get more accurate mean value and smaller variance than the existing method, and it has better RTWPtarget control capability.

According to the above analysis, it can be seen that very evident beneficial effects can be acquired in the CDMA system in accordance with the method of the present invention. According to the above analysis, the method of the present invention has more accurate mean value and smaller variance than the existing method, thus it has better RTWPtarget control capability. In the CDMA system, the method of the present invention can be applied to acquire very evident beneficial effects.

### Industrial Applicability

The present invention provides a Node B and method for inner-loop power control to effectively control the uplink power of the UE in the cell according to the current RTWP so that the RTWP can better stay around the RTWPtarget and the CDMA system can be ensured to operate more stably.

## Claims

1. A method for inner-loop power control, the method comprising:
a Node B setting a received total wideband power threshold (RTWP_Th); and
periodically measuring current received total wideband power (RTWP) in a cell in a process of the Node B receiving uplink power of user equipment (UE), and for each UE, if following conditions are all satisfied, the Node B setting a current power control word of the UE as descending power and transmitting the current power control word to the UE:
(a) said current RTWP is larger than the RTWP_Th; and
(b) a previous power control word of the UE is ascending power.

2. The method of claim 1, the method further comprising:
for each UE, the Node B calculating a power control word of the UE, and when either of the conditions (a) and (b) or both are not satisfied, said Node B taking a calculated power control word as the current power control word of the UE and transmitting the current power control word to corresponding UE.

3. The method of claim 2, wherein,
the step of said Node B calculating the power control word of the UE also comprises: said Node B calculating the power control word of each UE in each measurement period or calculating the power control word of the corresponding UE when either of the conditions (a) and (b) or both are not satisfied.

4. A method for inner-loop power control, the method comprising:
a Node B setting a received total wideband power threshold (RTWP_Th); and
periodically measuring current received total wideband power (RTWP) of a cell during a process of the Node B receiving uplink power of user equipment (UE), and for each UE, if the current RTWP is larger than the RTWP_Th, setting a current power control word of the UE as descending power and transmitting the current power control word to the UE.

5. The method of claim 4, said method further comprising:
if the current RTWP is less than or equal to the RTWP_Th, the Node B calculating the current power control word of each UE in the cell and transmitting calculated said current power control word to each UE.

6. The method of claim 5, said method further comprising:
said Node B calculating a power control word of each UE in each measurement period or calculating the power control word of each UE when the current RTWP is less than or equal to the RTWP_Th.

7. A Node B for inner-loop power control, the Node B comprising a measurement module, a setting module, a control module and a transmission module;
said setting module is configured to set a received total wideband power threshold (RTWP_Th);
said measurement module is configured to: periodically measure current received total wideband power (RTWP) of a cell in a process of the Node B receiving uplink power of user equipment (UE);
said control module is configured to: when following conditions are all satisfied, set a current power control word of the UE as descending power and transmit the current power control word of the UE to the transmission module:
(a) said current RTWP is larger than the RTWP_Th; and (b) a previous power control word of the UE is ascending power;
said transmission module is configured to: transmit a received current power control word of the UE to the UE.

8. The Node B of claim 7, wherein,
said Node B also comprises a calculation module, and said calculation module is configured to: calculate a power control word of each UE and transmit a calculated power control word to the control module;
said control module is also configured to: when either of the conditions (a) and (b) or both are not satisfied, transmit the current power control word of the UE calculated by the calculation module to the transmission module.

9. The Node B of claim 8, wherein,
said calculation module is also configured to: calculate the power control word of each UE in each measurement period or calculate the power control word of corresponding UE when either of the conditions (a) and (b) or both are not satisfied.

10. A Node B for inner-loop power control, the Node B comprising a measurement module, a setting module, a control module and a transmission module; wherein
said setting module is configured to set a received total wideband power threshold (RTWP_Th);
said measurement module is configured to: periodically measure current received total wideband power (RTWP) of a cell in a process of the Node B receiving uplink power of user equipment (UE);
said control module is configured to: judge whether the current RTWP is larger than the RTWP_Th or not, and if yes, set a current power control word of each UE as descending power and transmit the current power control word of each UE to the transmission module;
said transmission module is configured to: transmit the current power control word of each UE to the UE.

11. The Node B of claim 10, wherein,
said Node B also comprises a calculation module, and said calculation module is configured to: calculate a power control word of each UE and transmit a calculated power control word of each UE to the control module;
said control module is also configured to: when the current RTWP is equal to or less than the RTWP_Th, take the power control word of each UE calculated by the calculation module as the current power control word of each UE.

12. The Node B of claim 11, wherein,
said calculation module is configured to: calculate the power control word of the UE according to a following method: calculating the power control word of each UE in each measurement period or calculating the power control word of each UE when the current RTWP is less than or equal to the RTWP_Th.
